Europäisches Patentamt

European Patent Office

Office européen des brevets

(11) Veröffentlichungsnummer: **0 301 441 B1**

# (12) EUROPÄISCHE PATENTSCHRIFT

(45) Veröffentlichungstag der Patentschrift: **06.05.92**

(21) Anmeldenummer: **88111879.8**

(22) Anmeldetag: **23.07.88**

(51) Int. Cl.⁵: **F16D 7/04**

(54) **Überlastkupplung.**

(30) Priorität: **29.07.87 DE 3725096**

(43) Veröffentlichungstag der Anmeldung:
**01.02.89 Patentblatt 89/05**

(45) Bekanntmachung des Hinweises auf die
Patenterteilung:
**06.05.92 Patentblatt 92/19**

(84) Benannte Vertragsstaaten:
**BE DE FR GB IT**

(56) Entgegenhaltungen:
FR-A- 2 575 799      US-A- 1 881 728
US-A- 1 911 507      US-A- 1 999 523
US-A- 2 291 407      US-A- 3 091 950

(73) Patentinhaber: **DEERE & COMPANY**
**1 John Deere Road**
**Moline, Illinois 61265(US)**

(72) Erfinder: **Dannigkeit, Helmut**
**Lerchenstrasse 6**
**W-6661 Battweiler(DE)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

Rank Xerox (UK) Business Services
(3.08/2.18/2.0)

# Beschreibung

Die Erfindung betrifft eine Überlastkupplung mit Druckringen, die Zähne und Gleitbacken aufweisen.

Bei herkömmlichen Überlastkupplungen ohne Gleitbacken (DE-GM-1 827 231) gleiten im Überlastzustand die Zähne mit ihren Flanken aufeinander, und einer der Druckringe bewegt sich in axialer Richtung, und zwar so lange, bis schließlich die Zähne außer Eingriff geraten und für eine kurze Zeitspanne ihre Stirnflächen aufeinander gleiten. Anschließend gleiten die Flanken der Zähne wieder aufeinander; allerdings in der anderen Richtung, so daß sie wieder miteinander in Eingriff gelangen. Dieser Vorgang wiederholt sich so oft und so lange wie der Überlastzustand anhält. Dies bedeutet, daß sich dieser Vorgang bei einer Relativbewegung von 360 Winkelgraden zwischen beiden Druckringen entsprechend der Anzahl der Zähne wiederholt. Die Anzahl dieser Vorgänge wird auch als -Schlagzahl- bezeichnet.

Je höher diese Schlagzahl ist, desto größer ist auch die Beanspruchung des Materials der Druckringe; ebenso steigt damit auch die Lärmentwicklung.

Bei einer von Werkzeugmaschinen bekannten Überlastkupplung (US-A-1,881,728) enthalten die beiden Druckringe bereits Gleitbacken, die aufeinander gleiten, wenn die Zähne aufgrund eines Überlastzustandes außer Eingriff geraten sind. Dabei vollziehen die beiden Druckringe eine Relativbewegung zueinander von 360°, bis die Zähne erneut die Möglichkeit haben, ineinander einzugreifen. Die mit einer solchen Überlastkupplung erreichte Schlagzahl kann bei bestimmten Einsatzverhältnissen zu gering sein, und die Druckringe müssen bei diesem Stand der Technik in aufwendiger Weise so geformt werden, daß ein vorzeitiges Ineinandereingreifen nicht möglich ist.

Die der Erfindung zugrunde liegende Aufgabe wird darin gesehen, eine Überlastkupplung gemäß der letztgenannten Bauart vorzuschlagen, die bei Einhaltung einer geringen Schlagzahl dennoch ein großes Drehmoment übertragen kann und kostengünstig herstellbar ist.

Diese Aufgabe ist erfindungsgemäß mit der Lehre nach Patentanspruch 1 gelöst worden, und in den von diesem abhängigen Patentansprüchen sind vorteilhafte Weiterentwicklungen dieser Lehre enthalten.

Auf diese Weise wird das hohe zu übertragende Drehmoment über die Abmessungen und Anzahl der Zähne bestimmt, wie dies bisher auch der Fall war; entsteht jedoch eine Überlastsituation, dann kommen die Zähne nicht sofort wieder miteinander in Eingriff, sondern die beiden Druckringe rutschen zunächst um einen bestimmten Winkelbereich mit ihren Gleitbacken aufeinander. Daraus folgt, daß pro 360 Winkelgraden Relativbewegung zwischen beiden Druckringen eine Schlagzahl von z. B. 1, 2 oder 3 entsteht, die eine beträchtliche Steigerung der Standzeit der Überlastkupplung bewirkt. Diese Bauweise einer Überlastkupplung ist insbesondere dann angebracht, wenn es beim Auftreten eines Überlastzustandes nicht darauf ankommt, daß die Überlastkupplung noch ein Restdrehmoment aufbaut, das negative Drehmomente verhindern soll. Ein derartiger Anwendungsfall ist dort gegeben, wo an einem angetriebenen Teil eine Blockage oder Verstopfung auftritt, die verhindert, daß der Teil weiterhin angetrieben wird, während der antriebsseitige Teil der Überlastkupplung zumindest bis zum Erkennen der Verstopfung noch angetrieben wird. Ein bevorzugtes Anwendungsgebiet für derartige Überlastkupplungen sind Erntemaschinen, insbesondere Einzugsorgane an Mähdreschern und Feldhäckslern. Die identische Ausbildung der beiden Druckringe ermöglicht es, diese in einem Schmiedegesenk herzustellen, was eine beträchtliche Kostensenkung zur Folge hat.

Durch die Größe des Bogenmaßes der Gleitbacken wird die Schlagzahl der Überlastkupplung während einer vollen Relativdrehung beeinflußt, und durch das Anbringen von Reibbelägen auf den Gleitbacken kann das Rutschverhalten beider Druckringe im Überlastzustand verändert werden.

In der Zeichnung ist ein nachfolgend näher beschriebenes Ausführungsbeispiel der Erfindung dargestellt. Es zeigt:

Fig. 1    einen Druckring einer Überlastkupplung in Vorderansicht und

Fig. 2    den Druckring aus Figur 1 in Seitenansicht und im Schnitt gemäß der Linie 2-2 in Figur 1 und in der Blickrichtung der dazugehörigen Pfeile.

Eine erfindungsgemäße Überlastkupplung setzt sich aus zwei vorzugsweise geschmiedeten und identischen Druckringen 10 zusammen, von denen einer in der Zeichnung dargestellt ist und im folgenden beschrieben wird.

Jeder Druckring 10 ist rotationssymmetrisch ausgebildet und wird im wesentlichen von einem radial inneren Zahnring 12 und einem radial äußeren Reibring 14 gebildet, die gemeinsam einen Teil bilden.

Der Zahnring 12 umfaßt eine Öffnung 16, Nocken 18 und Zähne 20.

Durch die Öffnung 16 kann z. B. eine nicht gezeigte anzutreibende Welle geführt werden.

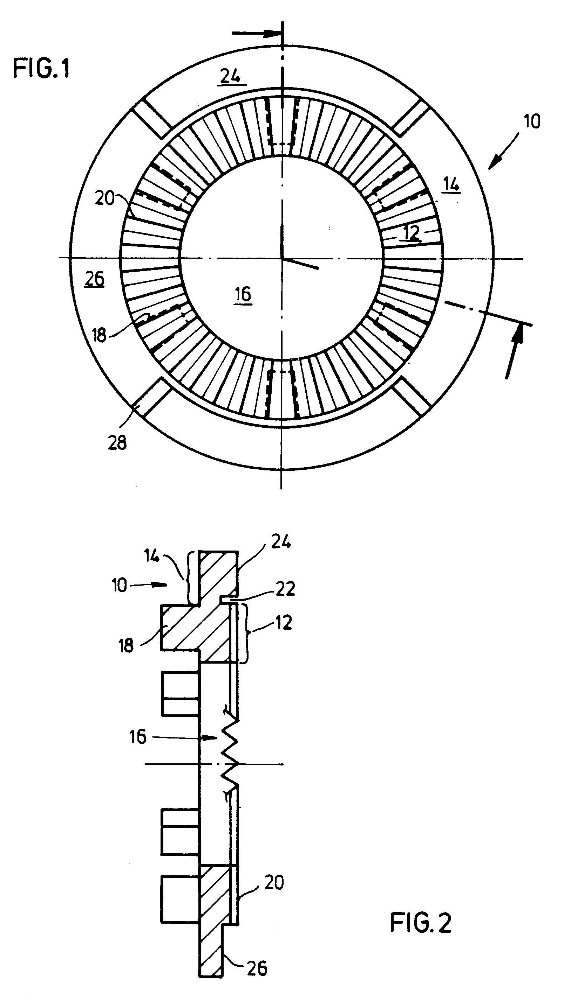

Die Nocken 18 sind auf der in Figur 2 linken Stirnfläche des Zahnringes 12 angebracht und können in einen ebenfalls nicht gezeigten An- oder Abtriebsteil eingreifen, wobei zwischen mindestens einen der Druckringe 10 und den An-oder Abtriebsteil eine axial nachgiebige Feder eingesetzt wird, so daß sich die beiden Druckringe 10 nicht nur tangential, sondern auch axial zueinander bewegen können.

Die Zähne 20 sind in herkömmlicher Weise konisch oder gewölbt ausgebildet und stehen mit den Zähnen des anderen Druckringes in Eingriff, um so im Unterlastbereich eine drehfeste Verbindung zwischen beiden Druckringen 10 zu erzeugen.

Der Reibring 14 setzt sich aus Gründen der Fertigung über eine Nut 22 radial gegenüber dem Zahnring 12 etwas ab und trägt auf seiner den Zähnen 20 des Zahnringes 12 gemeinsamen Stirnfläche Gleitbacken 24. Gemäß Figur 1 erstrecken sich zwei Gleitbacken 24 über jeweils ca. 90 Winkelgrade und lassen zwischen sich ein Tal 26 von ebenfalls ca. 90 Winkelgraden. Allerdings könnten pro Druckring 10 auch nur eine Gleitbacke 24 und ein Tal 26 vorgesehen sein, die sich über jeweils ca. 180 Winkelgrade erstrecken. Verständlicherweise sind auch Gleitbacken 24 und Täler 26 denkbar, die sich über einen Teilbogenbereich von weitaus weniger Zähnen 20 erstrecken, wobei im vorliegenden Ausführungsbeispiel 36 Zähne 20 vorgesehen sind. Die Gleitbacken 24 und die Täler 26 sind so bemessen, daß jeweils eine Gleitbacke 24 in einem Tal 26 aufgenommen werden kann. Gegebenenfalls können sich die Täler 26 über einen geringfügig größeren Winkelbereich erstrecken als die Gleitbacken 24.

Der Übergang zwischen den Tälern 26 und Gleitbacken 24 erfolgt über eine Schräge 28. Gewünschtenfalls können auf die Gleitbacken 24 auch Reibbeläge aufgeklebt oder sonstwie befestigt werden, um das Gleitverhalten der beiden Druckringe 10 im Überlastzustand zu beeinflussen.

Aus Figur 2 ist zu entnehmen, daß die Gleitbacken 24 und die Zähne 20 in der gleichen rechtwinklig zur Symmetrieachse verlaufenden Ebene enden.

Werden zwei derartige Druckringe 10 so zusammengefügt, daß sich jeweils eine Gleitbacke 24 und ein Tal 26 gegenüber liegen, dann können sie vollkommen aufeinander zubewegt werden, bis schließlich die Zähne 20 beider Druckringe 10 miteinander in Eingriff stehen. Beide Druckringe 10 stehen dann in einer drehfesten Verbindung miteinander und können ein Drehmoment übertragen.

Infolge der Konizität der Zähne 20 ergeben sich bei einem angreifenden Drehmoment bekanntermaßen Axialkräfte, und es wird durch den Widerstand der Feder bestimmt, bei welchem Drehmoment eine Axialverschiebung eines oder beider Druckringe 10 erfolgt, die ausreicht, um die Zähne 20 außer Eingriff zu bringen. Mit dieser Axialverschiebung geht eine relative Tangentialbewegung zwischen beiden Druckringen 10 einher, die bewirkt, daß die Gleitbacken 24 axial aus den Tälern 26 gehoben werden und sich tangential aufeinander zubewegen. Stehen sich die Stirnflächen der Zähne 20 beider Druckringe 10 gegenüber, dann kommt eine Gleitbacke 24 auf der anderen zu liegen und bei einer fortgesetzten Relativbewegung zwischen beiden Druckringen 10 gleiten beide Gleitbacken 24 aufeinander. Dieser Gleitvorgang endet erst dann, wenn sich wieder eine Gleitbacke 24 und ein Tal 26 gegenüberliegen, so daß infolge der Federkraft die beiden Druckringe 10 wieder aufeinander zubewegt werden und in Eingriff gelangen. Danach wiederholt sich entweder der gleiche Vorgang erneut, oder es ist wieder der Unterlastzustand eingetreten und die beiden Druckringe 10 bleiben miteinander in Eingriff.

**Patentansprüche**

1. Überlastkupplung mit mindestens zwei Druckringen (10), von denen mindestens einer axial beweglich ist und die sich radial und axial erstreckende Zähne (20) aufweisen, die im Unterlastzustand ineinander eingreifen, wobei jeder Druckring (10) mindestens eine Gleitbacke (24) aufweist, die sich über einen mehrere Zähne (20) umfassenden Teilbogenbereich der Druckringe (10) erstreckt und deren axiale Abmessung mindestens so groß ist wie die der Zähne (20), dadurch gekennzeichnet, daß die Druckringe (10) identisch ausgebildet und spiegelbildlich angeordnet sind.

2. Überlastkupplung nach Anspruch 1, dadurch gekennzeichnet, daß sich jede Gleitbacke (24) über einen Teilbogenbereich von ca. 180 Winkelgraden erstreckt.

3. Überlastkupplung nach Anspruch 1, dadurch gekennzeichnet, daß sich jede Gleitbacke (24) über einen Teilbogenbereich von ca. 90 Winkelgraden erstreckt.

4. Überlastkupplung nach Anspruch 1, dadurch gekennzeichnet, daß der oder die Gleitbacken (24) mit einem Reibbelag versehen sind.

**Claims**

1. Overload clutch with at least two pressure rings (10), of which at least one is axially movable and which have teeth (20) extending radially and axially and inter-engaging in the loaded state, wherein each pressure ring (10) has a least one sliding shoe (24) extending over an arcuate region of the pressure ring (10) subtending a plurality of teeth (20) and having an axial dimension at least as great as that of the teeth (20), characterized in that the pressure rings (10) are identically formed and arranged in mirror image fashion.

2. Overload clutch according to claim 1, characterized in that each sliding shoe (24) extends over an arcuate region of about 180 degrees of angle.

3. Overload clutch according to claim 1, characterized in that each sliding shoe (24) extends over an arcuate region of about 90 degrees of angle.

4. Overload clutch according to claim 1, characterized in that the sliding shoe or shoes (24) are provided with a friction layer.

**Revendications**

1. Accouplement de surcharge comprenant au moins deux anneaux de pression (10) dont l'un au moins est mobile axialement et qui portent des dents (20) s'étendant radialement et axialement, dents qui sont en prise mutuelle à l'état de sous-charge, chaque anneau de pression (10) présentant au moins une joue de glissement (24) qui s'étend sur une zone en arc de cercle comprenant plusieurs dents (20) des anneaux de pression (10) et dont la dimension axiale correspond au moins à celle des dents (20), caractérisé en ce que les anneaux de pression (10) ont une conformation identique et sont disposés symétriquement.

2. Accouplement de surcharge selon la revendication 1, caractérisé en ce que chaque joue de glissement (24) s'étend sur une zone en arc de cercle d'environ 180 degrés d'angle.

3. Accouplement de surcharge selon la revendication 1, caractérisé en ce que chaque joue de glissement (24) s'étend sur une zone en arc de cercle d'environ 90 degrés d'angle.

4. Accouplement de surcharge selon la revendication 1, caractérisé en ce que la ou les joues de glissement (24) sont pourvues d'une garniture de friction.

FIG.1

24

10

20

14

12

26

16

18

28

FIG.2

14

24

10

22

18

12

16

20

26